# EUROPÄISCHE PATENTANMELDUNG

(11) **EP 0 893 895 A2**
(43) Veröffentlichungstag der Anmeldung: **27.01.1999**
(21) Anmeldenummer: 98440128.1
(22) Anmeldetag: 17.06.1998
(51) Int. Cl.: H04L 9/12, H04L 9/08

(54) **Verfahren zum Übermitteln verschlüsselter Signale, sowie Sendeeinrichtung und Empfangseinrichtung dafür**

(30) Priorität: 19.06.1997 DE 19726003
(71) Anmelder: Alcatel Alsthom Compagnie Generale d'Electricité, 75088 Paris (FR)
(72) Erfinder: Wahl, Stefan, 71701 Schwieberdingen (DE)
(74) Vertreter: Brose, Gerhard, Dipl.-Ing.

(57) **Zusammenfassung**

Die Erfindung betrifft ein Verfahren zum Übermitteln verschlüsselter Signale zwischen einer Sendeeinrichtung und einer Empfangseinrichtung, bei welchem zwischen der Sendeeinrichtung und der Empfangseinrichtung ein erster Übertragungskanal mit einem ersten Schlüssel hergestellt und zur Übermittlung verschlüsselter Information verwendet wird, bei welchem zum Zwecke des Wechselns des Schlüssels während der Übermittlung ohne Unterbrechung derselben, unter Zuhilfenahme einer geeigneten Signalisierung ein zweiter Übertragungskanal zwischen der Sendeeinrichtung und der Empfangseinrichtung aufgebaut wird, daß für diesen zweiten Kanal ein zweiter Schlüssel festgelegt wird, daß auf diesen zweiten Übertragungskanal umgeschaltet wird und daß mit der Übermittlung verschlüsselter Information im zweiten Übertragungskanal fortgefahren wird, sowie eine Sendeeinrichtung und eine Empfangseinrichtung.

## Beschreibung

Die Erfindung betrifft ein Verfahren zum Übermitteln verschlüsselter Signale zwischen einer Sendeeinrichtung und einer Empfangseinrichtung, bei welchem zwischen der Sendeeinrichtung und der Empfangseinrichtung ein erster Übertragungskanal mit einem ersten Schlüssel hergestellt und zur Übermittlung verschlüsselter Information verwendet wird, nach dem Oberbegriff des Anspruchs 1, eine Sendeeinrichtung nach dem Oberbegriff des Anspruchs 5 und eine Empfangseinrichtung nach dem Oberbegriff des Anspruchs 6.

Die Bedeutung der Übermittlung von Signalen in verschlüsselter Form hat in letzter Zeit stark zugenommen und wird noch weiter zunehmen. Der Grund dafür liegt in der starken Zunahme der Benutzung gemeinsamer Übertragungsmedien durch Endverbraucher für individuelle Nutzungen. Betroffen sind dabei vor allem Breitbandnetze mit Rückkanal. Der Grund für die Verschlüsselung liegt dabei vor allem in der Verhinderung unberechtigter Nutzung von Diensten. Beispielsweise muß verhindert werden, daß sich ein Teilnehmer beim Authentifizieren für einen anderen ausgibt und dann auf dessen Kosten einen Dienst, zum Beispiel ein Telefongespräch, in Anspruch nimmt. Mindestens genauso wichtig ist, zu verhindern, daß ein von einem Teilnehmer berechtigterweise in Anspruch genommener Dienst, zum Beispiel die Zuspielung eines gebührenpflichtigen Videofilms, von einem anderen Teilnehmer unberechtigt mitbenutzt wird.

Über die Art der Ver- und Entschlüsselung und über die Art und Weise, wie die Schlüssel verteilt werden, soll hier nichts ausgesagt werden. Unter dem Begriff "Schlüssel", auf den es hier auch gar nicht ankommt, soll hier sowohl das für die Verund Entschlüsselung verwendete Verfahren, als auch ein jeweils im Einzelfall einzusetzender Datensatz verstanden werden.

In der Regel steigt der für die Ver- und Entschlüsselung erforderliche Aufwand mit der Sicherheit des Schlüssels gegen unberechtigte Entschlüsselung. Es wird deshalb meist mit etwas einfacheren Schlüsseln gearbeitet, die aber immer wieder gewechselt werden. Bei nur kurzzeitiger Anwendung von Schlüsseln, zum Beispiel zum Signalisieren, genügt es, für jeden Anwendungsfall einen anderen Schlüssel zu verwenden. Für längerdauernde Verbindungen, zum Beispiel für die Übermittlung eines Videofilms, sollte während der Übermittlung von Zeit zu Zeit der Schlüssel gewechselt werden.

Beim Wechsel des Schlüssels während der Übertragung von Nutzinformation stellt sich immer das Problem, die Übertragung selbst kontinuierlich weiterlaufen zu lassen.

Der Erfindung liegt die Aufgabe zugrunde, beim verschlüsselten Übertragen von Signalen einen Wechsel des Schlüssels vorzunehmen, und dabei die Übertragung selbst kontinuierlich weiterlaufen zu lassen.

Diese Aufgabe wird erfindungsgemäß gelöst durch ein Verfahren nach der Lehre des Anspruchs 1, eine Sendeeinrichtung nach der Lehre des Anspruchs 5 und eine Empfangseinrichtung nach der Lehre des Anspruchs 6.

Zum Wechseln des Schlüssels wird demnach ein zweiter Übertragungskanal aufgebaut, in dem von Anfang an ein anderer Schlüssel vereinbart ist. Anschließend wird die Übertragung im ersten Kanal unterbrochen und im zweiten Kanal fortgesetzt.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt ein erstes Beispiel des Ablaufs eines erfindungsgemäßen Schlüsselwechsels.
- Figur 2: zeigt ein zweites Beispiel des Ablaufs eines erfindungsgemäßen Schlüsselwechsels

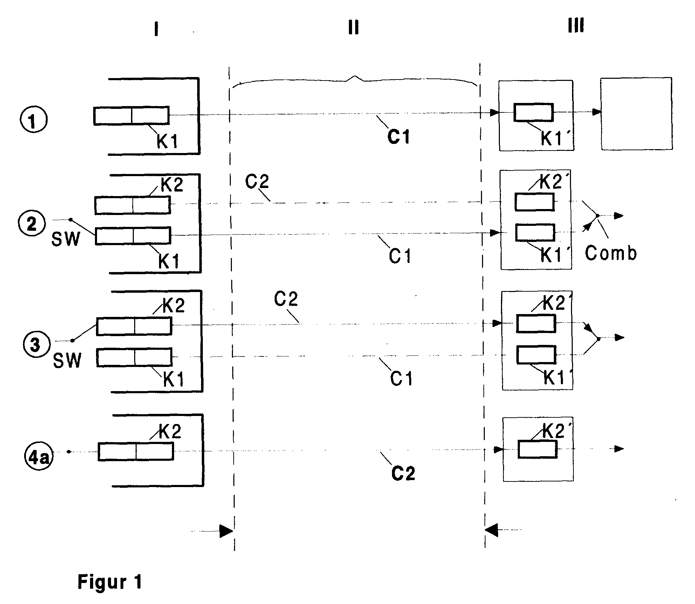

Anhand der Figur 1 wird zunächst eine Netzkonfiguration beschrieben, in der das erfindungsgemäße Verfahren zur Anwendung kommt.

In der Zeichnung von links nach rechts werden drei Netzbereiche I, II und III unterschieden. Der Netzbereich I ist der Bereich des Netzbetreibers und Diensteanbieters, dort befindet sich eine Sendeeinrichtung, der Netzbereich II stellt den Netzzugangsbereich dar und der Netzbereich III ist der Bereich des Endteilnehmers, wo sich eine Empfangseinrichtung befindet. Daß auch in der Gegenrichtung eine Übertragung möglich sein kann und zumindest für die Signalisierung auch möglich sein muß, wird hier nicht weiter betrachtet. Es ist jedenfalls nicht zwingend, daß bezüglich der Verschlüsselung beide Richtungen gleich behandelt werden müssen.

Die oben beschriebenen Gründe für die Verschlüsselung betreffen vor allem den Netzzugangsbereich, weshalb hier ein Beispiel gezeigt ist, bei dem nur in diesem Bereich verschlüsselt übertragen wird. Die Anwendung des erfindungsgemäßen Verfahrens ist jedoch nicht auf diesen Bereich beschränkt.

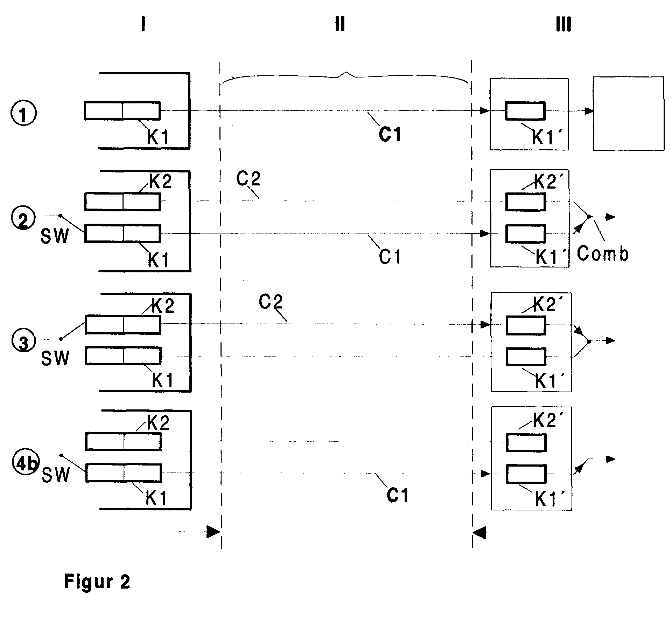

In Figur 1 (und auch in Figur 2) wird der zeitliche Ablauf durch untereinanderliegende Darstellungen veranschaulicht. In der ersten Zeile durchläuft das Signal zunächst eine erste Verschlüsselungseinheit K1 in der Sendeeinrichtung, dann einen Übertragungskanal C1 im Netzzugangsbereich und zuletzt eine erste Entschlüsselungseinheit K1' in der Empfangseinrichtung. Die erste Verschlüsselungseinheit K1 und die erste Entschlüsselungseinheit K1' arbeiten mit einem ersten Schlüssel.

Verschlüsselungseinheiten und Entschlüsselungseinheiten sind an sich bekannt und brauchen nicht näher beschrieben zu werden.

Der darauf folgende Vorgang wird nun in nicht näher beschriebener Weise durch Signalisierung gesteuert. Weder der Ausgangspunkt, noch die Wege, die die Signalisierung nimmt, sind hier von Bedeutung.

Es wird ein zweiter Übertragungskanal C2 aufgebaut, der in der Sendeeinrichtung durch eine zweite Verschlüsselungseinheit K2 und in der Empfangseinrichtung durch eine zweite Entschlüsselungseinheit K2' abgeschlossen ist. Die zweite Verschlüsselungseinheit K2 und die zweite Entschlüsselungseinheit K2' arbeiten mit einem zweiten Schlüssel.

Auch die Herkunft der beiden Schlüssel ist hier ohne Bedeutung. Das Problem der gesicherten Schlüsselverteilung ist unabhängig vom vorliegenden Problem. Auch Lösungen hierfür sind bekannt.

Die zweite Verschlüsselungseinheit K2 muß nicht unbedingt, wie hier gezeigt, eine von der ersten Verschlüsselungseinheit K1 baulich verschiedene Einheit sein. Besonders unter Berücksichtigung der Tatsache, daß ohnehin zu keinem Zeitpunkt beide Verschlüsselungseinheiten im Einsatz sind, ist es naheliegend, die Funktion beider Verschlüsselungseinheiten im Zeitmultiplex durch eine einzige Verschlüsselungseinheit zu realisieren. Sinngemäß gilt dies auch für die beiden Entschlüsselungseinheiten K1' und K2'. Dabei ist allenfalls noch zu berücksichtigen, ob schon vor dem Entschlüsseln des Datenstroms erkennbar ist, ob gerade im einen oder anderen Kanal ein zu entschlüsselndes Signal anliegt oder nicht. In der Regel ist aber zumindest dies zu erkennen.

Zusätzlich zum zweiten Übertragungskanal mit einem zweiten Schlüssel ist noch eine geeignete Umschaltmöglichkeit vorgesehen. Auf der Seite der Sendeeinrichtung ist ein einfacher Schalter Sw zur Umschaltung zwischen den Eingängen der beiden Verschlüsselungseinheiten vorgesehen. Stattdessen ist natürlich auch die Umschaltung einer einzigen Verschlüsselungseinheit zwischen zwei Schlüsseln geeignet. An den Ausgängen der beiden Entschlüsselungseinheiten K1' und K2' ist eine einfache Verbindung Comb eingezeichnet, mit der angedeutet wird, daß hier die Ausgangsdaten beider Kanäle, die ja nie gleichzeitig ankommen, einfach zusammengefaßt werden können.

In der darunterliegenden Zeile ist der Schalter Sw umgeschaltet, wodurch die Übertragung vom Übertragungskanal C1 auf den Übertragungskanal C2 übergeht. Damit ist die Umschaltung der Schlüssel vollzogen.

In der darunterliegenden Zeile ist der Übertragungskanal C1 wieder abgebaut.

Das Beispiel nach Figur 2 unterscheidet sich von dem nach Figur 1 nur dadurch, daß am Schluß, in der letzten Zeile der Zeichnung, wieder auf den ursprünglichen Übertragungskanal zurückgeschaltet wird, wobei aber diesmal kein Wechsel des Schlüssels erfolgt.

Selbstverständlich muß das sendeseitige Umschalten empfangsseitig erkennbar sein. Hierzu kann, im einen oder anderen Kanal, eine Marke eingefügt werden, die den Umschaltvorgang kennzeichnet. Es gibt aber auch Übertragungsverfahren, bei denen das Vorhandensein eines Nutzsignals vom Fehlen eines Nutzsignals unterscheidbar ist. In solchen Fällen kann das Umschalten einfach dadurch erfolgen, daß durch die Sendeeinrichtung beim Umschalten das Senden des Nutzsignals im ersten Übertragungskanal eingestellt und im zweiten Übertragungskanal fortgeführt wird und daß durch die Empfangseinrichtung aus beiden Übertragungskanälen das jeweilige Nutzsignal ausgefiltert wird und daß die beiden Nutzsignale zum Zeitpunkt ihrer jeweiligen Ankunft an einen Ausgang der Empfangseinrichtung weitergeschaltet werden.

Ein Beispiel eines solchen Übertragungsverfahrens ist das ATM-Verfahren (ATM = Asynchronous Transfer Mode). Dies ist ein schnelles Paketübermittlungsverfahren, bei dem Pakete (Zellen) verschiedener Verbindungen im asynchronen Zeitmultiplex übertragen werden. Die zusammengehörigen Pakete sind entsprechend gekennzeichnet und bilden den Inhalt eines virtuellen Kanals. Auf einem Übertragungsweg werden nun ineinandergeschachtelt die Inhalte einer Vielzahl solcher virtuellen Kanäle übertragen. Freie Kapazität ist durch Leerpakete aufgefüllt. In diesem Fall wird für die Umschaltung ein zweiter virtueller Kanal aufgebaut, der solange keine mehr Kapazität beansprucht, solange der Inhalt nicht tatsächlich auf diesen Kanal umgeschaltet ist. Anschließend wird im ersten Kanal keine Kapazität beansprucht, selbst wenn er nicht abgebaut wird. Er könnte damit für einen weiteren Schlüsselwechsel verwendet werden.

Durch das mehrmalige Hin- und Herwechseln zwischen zwei Kanälen würde aber ein Vorteil dieses Verfahrens teilweise wieder aufgegeben werden. Durch den Wechsel auf einen vom ersten Kanal völlig unabhängigen zweiten Kanal wird nämlich gleichzeitig mit dem Wechseln des Schlüssels die Übertragung nicht mehr ohne weiteres verfolgbar. Ein Unberechtigter kann deshalb die Übertragung nicht einmal in verschlüsselter Form weiterverfolgen, um so möglichst schnell wieder einen Entschlüsselungsversuch zu starten. Durch Belegung von Blindkanälen kann in gering ausgelasteten Leitungen die Nichtverfolgbarkeit noch erhöht werden.

Die erfindungsgemäße Lösung des Problems des Schlüsselwechsels erhöht durch die Nichtverfolgbarkeit noch zusätzlich die Sicherheit gegen unbefugtes Entschlüsseln.

## Patentansprüche

1. Verfahren zum Übermitteln verschlüsselter Signale zwischen einer Sendeeinrichtung und einer Empfangseinrichtung, bei welchem zwischen der Sendeeinrichtung und der Empfangseinrichtung ein erster Übertragungskanal mit einem ersten Schlüssel hergestellt und zur Übermittlung verschlüsselter Information verwendet wird, **dadurch gekennzeichnet, daß,** zum Zwecke des Wechselns des Schlüssels während der Übermittlung ohne Unterbrechung derselben, unter Zuhilfenahme einer geeigneten Signalisierung ein zweiter Übertragungskanal zwischen der Sendeeinrichtung und der Empfangseinrichtung aufgebaut wird, daß für diesen zweiten Kanal ein zweiter Schlüssel festgelegt wird, daß auf diesen zweiten Übertragungskanal umgeschaltet wird und daß mit der Übermittlung verschlüsselter Information im zweiten Übertragungskanal fortgefahren wird.

2. Verfahren nach Anspruch 1, dadurch gekennzeichnet, daß die Übertragungskanäle virtuelle Kanäle eines ATM-Übertragungssystems sind.

3. Verfahren nach Anspruch 1, dadurch gekennzeichnet, daß zur Kennzeichnung des Umschaltvorgangs in das zu übertragende Signal durch die Sendeeinrichtung eine Marke eingefügt wird, die von der Empfangseinrichtung als solche erkennbar ist.

4. Verfahren nach Anspruch 1, angewendet auf ein Übertragungsverfahren, bei dem das Übertragen eines Nutzsignals vom Fehlen der Übertragung eines Nutzsignals unterscheidbar ist, dadurch gekennzeichnet, daß durch die Sendeeinrichtung beim Umschalten das Senden des Nutzsignals im ersten Übertragungskanal eingestellt und im zweiten Übertragungskanal fortgeführt wird und daß durch die Empfangseinrichtung aus beiden Übertragungskanälen das jeweilige Nutzsignal ausgefiltert wird und daß die beiden Nutzsignale zum Zeitpunkt ihrer jeweiligen Ankunft an einen Ausgang der Empfangseinrichtung weitergeschaltet werden.

5. Sendeeinrichtung zum Senden verschlüsselter Signale zu einer Empfangseinrichtung, mit Mitteln, um zwischen der Sendeeinrichtung und der Empfangseinrichtung einen ersten Übertragungskanal mit einem ersten Schlüssel herzustellen und zur Übermittlung verschlüsselter Information zu verwenden , **dadurch gekennzeichnet, daß** Mittel vorhanden sind, um zum Zwecke des Wechselns des Schlüssels während der Übermittlung ohne Unterbrechung derselben unter Zuhilfenahme einer geeigneten Signalisierung einen zweiten Übertragungskanal zwischen der Sendeeinrichtung und der Empfangseinrichtung aufzubauen, um für diesen zweiten Kanal einen zweiten Schlüssel festzulegen, um auf diesen zweiten Übertragungskanal umzuschalten und um mit der Übermittlung verschlüsselter Information im zweiten Übertragungskanal fortzufahren.

6. Empfangseinrichtung zum Empfangen verschlüsselter Signale von einer Sendeeinrichtung, mit Mitteln, um zwischen der Sendeeinrichtung und der Empfangseinrichtung einen ersten Übertragungskanal mit einem ersten Schlüssel herzustellen und zur Übermittlung verschlüsselter Information zu verwenden , **dadurch gekennzeichnet, daß** Mittel vorhanden sind, um zum Zwecke des Wechselns des Schlüssels während der Übermittlung ohne Unterbrechung derselben unter Zuhilfenahme einer geeigneten Signalisierung einen zweiten Übertragungskanal zwischen der Sendeeinrichtung und der Empfangseinrichtung aufzubauen, um für diesen zweiten Kanal einen zweiten Schlüssel festzulegen, um auf diesen zweiten Übertragungskanal umzuschalten und um mit der Übermittlung verschlüsselter Information im zweiten Übertragungskanal fortzufahren.
